# EUROPÄISCHE PATENTANMELDUNG

(11) **EP 1 422 205 A1**
(43) Veröffentlichungstag der Anmeldung: **26.05.2004**
(21) Anmeldenummer: 02025871.1
(22) Anmeldetag: 19.11.2002
(51) Int. Cl.: C04B 22/14, C04B 22/08, C04B 40/00, C04B 28/02

(54) **Erstarrungs- und Erhärtungsbescleuniger für hydraulische Bindemittel sowie Verfahren zu dessen Herstellung**

(71) Anmelder: Sika Technology AG, 6340 Baar (CH)
(72) Erfinder: Sommer, Marcel, 8422 Pfungen (CH); Mäder, Urs, 8500 Frauenfeld (CH); Wombacher, Franz, 8917 Oberlunkhofen (CH); Lindlar, Benedikt, 78464 Konstanz (DE)
(74) Vertreter: Isler, Jörg

(57) **Zusammenfassung**

Ein Erstarrungs- und Erhärtungsbeschleuniger für hydraulische Bindemittel, umfasst: Al₂(SO₄)₃ Aluminiumsulfat, Al(OH)₃Aluminiumhydroxid und Mineralsäure in wässriger Lösung.

Vorzugsweise umfasst der Erstarrungs- und Erhärtungsbeschleuniger:
- 10 - 50% Al₂(SO₄)₃ Aluminiumsulfat,
- 5 - 30% Al(OH)₃ Aluminiumhydroxid,
- 0.5 - 10% einer Mineralsäure
in wässriger Lösung.

## Beschreibung

### Technisches Gebiet

Die Erfindung geht aus von einem Erstarrungs- und Erhärtungsbeschleuniger für hydraulische Bindemittel nach dem Oberbegriff des ersten Anspruches.
Die Erfindung geht ebenfalls aus von einem Verfahren zur Herstellung eines Erstarrungs- und Erhärtungsbeschleuniger für hydraulische Bindemittel nach dem Oberbegriff des unabhängigen Verfahrensanspruches.

### Stand der Technik

Es sind viele Substanzen bekannt, welche das Abbinden und Erhärten von Beton beschleunigen. Gebräuchlich sind beispielsweise stark alkalisch reagierende Stoffe wie Alkalihydroxide, Alkalicarbonate, Alkalisilikate, Alkalialuminate und Erdalkalichloride. Bei den stark alkalisch reagierenden Stoffen können jedoch unerwünschte Belästigungen des Verarbeiters, wie Verätzungen, auftreten und sie reduzieren die Endfestigkeit und die Dauerhaftigkeit des Betons.

Aus der EP 0 076 927 B1 sind alkalifreie Abbindebeschleuniger für hydraulische Bindemittel bekannt, welche diese Nachteile vermeiden sollen. Zur Beschleunigung des Abbindens und Erhärtens eines hydraulischen Bindemittels, wie Zement, Kalk, hydraulischer Kalk und Gips sowie daraus hergestelltem Mörtel und Beton, werden dem Gemisch, welches das genannte Bindemittel enthält, von 0.5 bis 10 Gew.%, bezogen auf das Gewicht dieses Bindemittels, eines alkalifreien Abbinde- und Erhärtungsbeschleuniger zugegeben, wobei dieser Beschleuniger Aluminiumhydroxid enthält.
Solche Mörtel und Betone sind durch das beschleunigte Abbinden und Erhärten besonders gut geeignet als Spritzmörtel und -beton.

Aus der EP 0 946 451 B1 sind Erstarrungs- und Erhärtungsbeschleuniger in gelöster Form für hydraulische Bindemittel bekannt, welche beim Spritzen des Betons leichter dem Beton zugemischt werden können. Ein solcher Erstarrungs- und Erhärtungsbeschleuniger besteht unter anderem aus Aluminiumhydroxid, Aluminiumsalzen und organischen Karbonsäuren. Nachteil solcher Erstarrungs- und Erhärtungsbeschleuniger ist jedoch die Stabilität der Lösung.

### Darstellung der Erfindung

Der Erfindung liegt die Aufgabe zugrunde, bei einem Erstarrungs- und Erhärtungsbeschleuniger für hydraulische Bindemittel der eingangs genannten Art eine möglichst hohe Beschleunigungswirkung bei möglichst langer Lebensdauer des Beschleunigers zu erzielen.

Erfindungsgemäss wird dies durch die Merkmale des ersten Anspruches erreicht.

Die Vorteile der Erfindung sind unter anderem darin zu sehen, dass durch die erfindungsgemässen Beschleuniger eine hohe Stabilität, d.h. Stabilisierung der Beschleuniger-Lösung erzielt wird und dass eine hohe Beschleunigung für das Abbinden und Erhärten von hydraulischen Bindemitteln erzielt wird.

Hydraulische Bindemittel mit Zusatz des erfindungsgemässen Beschleunigers können aufgrund ihres beschleunigten Erstarrungs- und Erhärtungsverhaltens vorteilhafterweise durch Spritzen verarbeitet werden.

Weitere vorteilhafte Ausgestaltungen der Erfindung ergeben sich aus den Unteransprüchen.

### Weg zur Ausführung der Erfindung

Ein erfindungsgemässer Erstarrungs- und Erhärtungsbeschleuniger für hydraulische Bindemittel umfasst:
Al₂(SO₄)₃Aluminiumsulfat, Al(OH)₃ Aluminiumhydroxid und Mineralsäure in wässriger Lösung.

Ein solcher erfindungsgemässer Erstarrungs- und Erhärtungsbeschleuniger besteht vorteilhafterweise im wesentlichen aus (in Gew.-%):
- 10 - 50% Al₂(SO₄)₃Aluminiumsulfat,
- 5 - 30% Al(OH)₃ Aluminiumhydroxid,
- 0.5 - 10% Mineralsäure,
- 0 - 10% Alkanolamin,
- 0 - 5.0% Fliessmittel,
- 0 - 20% Stabilisator,
in wässriger Lösung.

Als Mineralsäure wird vorzugsweise Phosphor- und Borsäure verwendet, es können jedoch auch andere gleichwirkende Mineralsäuren wie Salpetersäure, Schwefelsäure, usw. verwendet werden.

Als Alkanolamin wird vorteilhafterweise Diethanolamin verwendet.
Als Fliessmittel wird vorteilhafterweise Polycarboxylate und besonders vorteilhaft Sika ViscoCrete®, insbesondere Sika ViscoCrete® 20HE, verwendet.
Als Stabilisator wird vorteilhafterweise Silicasol verwendet.

Besonders vorteilhafte Erstarrungs- und Erhärtungsbeschleuniger bestehen im wesentlichen aus (in Gew.-%):
- 30 - 50% Al₂(SO₄)₃ Aluminiumsulfat, insbesondere 40 - 45%, und / oder
- 5 - 20% Al(OH)₃ Aluminiumhydroxid, insbesondere 10 - 17%, und / oder
- 0.5 - 8% Mineralsäure und / oder
- 0 - 5% Alkanolamin und / oder
- 0.1 - 3.0% Fliessmittel, insbesondere 0.1 bis 1.0 % und / oder
- 0 - 10% Stabilisator.

Weiter ist es vorteilhaft, den Mineralsäureanteil von 0.5 - 10% als H₃PO₄ Phosphorsäure und / oder H₃BO₃ Borsäure zuzugeben. Besonders vorteilhafte Bereiche liegen bei 1 - 5% H₃PO₄ Phosphorsäure und / oder 0.5 - 3.0% H₃BO₃ Borsäure.

Es wurden mehrere Proben eines erfindungsgemässen Beschleunigers in den oben angegeben Bereichen hergestellt. Die Zusammensetzung dieser Proben ist in den folgenden Beispielen angegeben.

### Beispiel 1:

7.60 kg Aluminiumhydroxid Al(OH)₃ wird einer Lösung von 22.50 kg Aluminiumsulfat mit Kristallwasser Al₂(SO₄)₃ x 14 H₂O in 17.06 kg Wasser H₂O bei 70 - 80°C zugegeben. Nachfolgend wird der so erhaltenen Lösung 1.14 kg einer Phosphorsäurelösung H₃PO₄ (75%), 2 kg eines Silicasols (10% Feststoffgehalt) und 1.70 kg eines Korrosionsinhibitors, einer 90% Lösung von Diethanolamin, zugegeben und diese Mischung eine halbe Stunde gerührt.
Die Stabilität dieser Mischung betrug mindestens 70 Tage.

### Beispiel 2:

7.60 kg Aluminiumhydroxid Al(OH)₃ wird einer Lösung von 22.50 kg Aluminiumsulfat mit Kristallwasser Al₂(SO₄)₃ x 14 H₂O in 14.86 kg Wasser H₂O bei 70 - 80°C zugegeben. Nachfolgend werden der erhaltenen Lösung 2.84 kg einer Phosphorsäurelösung H₃PO₄ (75%), 0.50 kg Polycarboxylate, z.B. Sika ViscoCrete® 20HE welches ein Hochleistungsverflüssiger darstellt, und 1.70 kg eines Korrosionsinhibitors, einer 90% Lösung von Diethanolamin, zugegeben und diese Mischung eine halbe Stunde gerührt.
Die Stabilität dieser Mischung betrug mindestens 70 Tage.

### Beispiel 3:

8.00 kg Aluminiumhydroxid Al(OH)₃ wird einer Lösung von 22.50 kg Aluminiumsulfat mit Kristallwasser Al₂(SO₄)₃ x 14 H₂O in 16.56 kg Wasser H₂O bei 70 - 80°C zugegeben. Nachfolgend werden der erhaltenen Lösung 1.14 kg einer Phosphorsäurelösung H₃PO₄ (75%), 0.10kg Borsäure H₃BO₃ und 1.70 kg eines Korrosionsinhibitors, einer 90% Lösung von Diethanolamin zugegeben und diese Mischung eine halbe Stunde gerührt.
Die Stabilität dieser Mischung betrug mindestens 70 Tage.

### Beispiel 4:

8.10 kg Aluminiumhydroxid Al(OH)₃ wird einer Lösung von 20.60 kg Aluminiumsulfat mit Kristallwasser Al₂(SO₄)₃ x 14 H₂O in 21.00 kg Wasser H₂O bei 70 - 80°C zugegeben. Nachfolgend wird der so erhaltenen Lösung 0.30 kg einer Borsäure H₃BO₃ zugegeben und diese Mischung eine halbe Stunde gerührt.
Die Stabilität dieser Mischung betrug mindestens 70 Tage.

### Beispiel 5:

8.00 kg Aluminiumhydroxid Al(OH)₃ wird einer Lösung von 21.00 kg Aluminiumsulfat mit Kristallwasser Al₂(SO₄)₃ x 14 H₂O in 20.00 kg Wasser H₂O bei 70 - 80°C zugegeben. Nachfolgend werden der erhaltenen Lösung 1.00 kg einer Borsäure H₃BO₃ und 0.50 kg Polycarboxylate, z.B. Sika ViscoCrete® 20HE welches ein Hochleistungsverflüssiger darstellt, zugegeben und diese Mischung eine halbe Stunde gerührt.
Die Stabilität dieser Mischung betrug mindestens 70 Tage.

Dem hydraulischen Bindemittel können 0.1 bis 10 Gew.-% des erfindungsgemässen Beschleunigers zugegeben werden.
Zur Bestimmung der Wirksamkeit des erfindungsgemässen Beschleunigers nach den Beispielen 1 bis 5 wurde Portlandzement jeweils 6% des Beschleunigers nach den oben genannten Beispielen zugemischt und Penetrometerwerte ermittelt. In der folgenden Tabelle sind die Penetrometerwerte mit der jeweilige Zeitdauer, bis eine Festigkeit von 200g, 600g und 2200g erreicht wird angegeben. Diese Penetrometerwerte wurden mit einer Nadel mit 3mm Durchmesser und mit einem Prüfgerät von RMU ermittelt.

Als Vergleich wurde eine Probe aus Portlandzement ohne Beschleuniger verwendet und die Penetrometerwerte für die gleiche Probenzusammensetzung wenn der Beschleuniger ersatzlos gestrichen wurde respektive wenn der Beschleuniger durch eine entsprechende Menge Wasser ersetzt wurde ermittelt.

| | | | |
|---|---|---|---|
| Penetrometerwert bei | 200g | 600g | 2200g |
| Beispiel 1 | 5 min | 7 min | 15 min |
| Beispiel 2 | 6 min | 8 min | 16 min |
| Beispiel 3 | 6 min | 9 min | 20 min |
| Beispiel 4 | 7 min | 14 min | 40 min |
| Beispiel 5 | 12 min | 20 min | 55 min |
| Probe ohne Beschleuniger | 450 min | 485 min | 540 min |
| Probe ohne Beschleuniger mit Anteil Wasser | 490 min | 522 min | 579 min |

Die nach den Beispielen 1 bis 5 hergestellten Beschleuniger ergaben somit Lösungen, die genügende Beschleunigswerte aufweisen und für eine genügend lange Zeitdauer stabil bleiben.

Die erfindungsgemässen Beschleuniger können auch für andere hydraulische Bindemittel als Zement wie Mischzemente, Kalk, hydraulischer Kalk und Gips und daraus hergestelltem Mörtel und Beton verwendet werden.

Selbstverständlich ist die Erfindung nicht auf das gezeigte und beschriebene Ausführungsbeispiel beschränkt. Die in wässriger Lösung vorliegenden Beschleuniger können auch getrocknet, z.B. durch ein allgemein bekanntes Sprühtrockenverfahren, verwendet werden. Das so erhaltene getrocknete Pulver, welches leicht in Wasser löslich ist, wird vor der Verwendung in Wasser aufgelöst und dann wie der flüssige Beschleuniger verwendet. Die nach den Beispielen 1 bis 5 hergestellten Proben können auch in einem Temperaturbereich von Raumtemperatur RT bis 90°C hergestellt werden, vorzugsweise jedoch in einem Bereich von 50 bis 80°C.

## Patentansprüche

1. Erstarrungs- und Erhärtungsbeschleuniger für hydraulische Bindemittel, umfassend:
Al₂(SO₄)₃Aluminiumsulfat, Al(OH)₃Aluminiumhydroxid und Mineralsäure in wässriger Lösung.

2. Erstarrungs- und Erhärtungsbeschleuniger nach Anspruch 1,
**dadurch gekennzeichnet**, (in Gew.-%),
dass der Aluminiumsulfatanteil 10 - 50% und / oder der Aluminiumhydroxidanteil 5 - 30% und / oder der Mineralsäureanteil 0.5 - 10% umfasst.

3. Erstarrungs- und Erhärtungsbeschleuniger nach Anspruch 1 oder 2,
**dadurch gekennzeichnet**, (in Gew.-%),
dass der Aluminiumsulfatanteil 30 - 50% und / oder der Aluminiumhydroxidanteil 5 - 20% umfasst.

4. Erstarrungs- und Erhärtungsbeschleuniger nach Anspruch 1, 2 oder 3,
**dadurch gekennzeichnet**, (in Gew.-%),
dass der Aluminiumsulfatanteil 40 - 45% und / oder der Aluminiumhydroxidanteil 10 - 17% und / oder der Mineralsäureanteil 0.5 - 8% umfasst.

5. Erstarrungs- und Erhärtungsbeschleuniger nach einem der vorhergehenden Ansprüche,
**dadurch gekennzeichnet,**
**dass** der Mineralsäureanteil (in Gew.-%) 1 - 5% H₃PO₄ Phosphorsäure und / oder 0.5 - 3.0% H₃BO₃ Borsäure umfasst.

6. Erstarrungs- und Erhärtungsbeschleuniger nach einem der vorhergehenden Ansprüche,
**dadurch gekennzeichnet,**
**dass** (in Gew.-%) 0 - 10% Alkanolamin und / oder 0 - 5.0% Fliessmittel und / oder 0 - 20% Stabilisator vorliegen.

7. Erstarrungs- und Erhärtungsbeschleuniger nach einem der vorhergehenden Ansprüche,
**dadurch gekennzeichnet,**
**dass** (in Gew.-%) 0 - 5% Alkanolamin und / oder 0 - 10% Stabilisator und /oder 0 - 3.0% Fliessmittel vorliegen.

8. Erstarrungs- und Erhärtungsbeschleuniger nach Anspruch 6 oder 7,
**dadurch gekennzeichnet,**
**dass** das Alkanolamin ein Diethanolamin ist.

9. Erstarrungs- und Erhärtungsbeschleuniger nach Anspruch 6 oder 7,
**dadurch gekennzeichnet,**
**dass** der Stabilisator ein Silicasol ist.

10. Erstarrungs- und Erhärtungsbeschleuniger nach Anspruch 6 oder 7,
**dadurch gekennzeichnet,**
**dass** das Fliessmittel ein Polycarboxylate ist.

11. Verfahren zur Herstellung eines Erstarrungs- und Erhärtungsbeschleuniger,
**dadurch gekennzeichnet,**
**dass** ein in wässriger Lösung vorliegender Erstarrungs- und Erhärtungsbeschleuniger nach Anspruch 1 bis 10 getrocknet wird, insbesondere durch ein Sprühtrockenverfahren.

12. Verfahren zur Herstellung eines Erstarrungs- und Erhärtungsbeschleuniger nach Anspruch 11,
**dadurch gekennzeichnet,**
**dass** die erhaltene getrocknete Mischung vor der Zugabe zum hydraulischen Bindemittel in Wasser gelöst wird.

13. Verfahren zur Herstellung eines Erstarrungs- und Erhärtungsbeschleuniger nach einem der Ansprüche 1 bis 10,
**dadurch gekennzeichnet,**
**dass** bei der Herstellung der wässrigen Lösung und der Zugabe der Komponenten bei der Herstellung der Lösung diese in einem Bereich von Raumtemperatur bis 90°C erwärmt wird.

14. Verfahren zur Herstellung eines Erstarrungs- und Erhärtungsbeschleuniger nach Anspruch 13,
**dadurch gekennzeichnet,**
**dass** die Lösung auf 50 - 80°C erwärmt wird.

15. Verfahren zur Beschleunigung des Abbindens und Erhärtens von hydraulischen Bindemitteln sowie daraus hergestelltem Mörtel oder Beton,
**dadurch gekennzeichnet,**
**dass** einem Gemisch, welches hydraulische Bindemittel enthält, einen Erstarrungs- und Erhärtungsbeschleuniger nach den Ansprüchen 1 bis 12 in einer Menge von 0.1 bis 10 Gew.-% bezogen auf das Gewicht des hydraulischen Bindemittels zugegeben wird.

16. Verwendung des Erstarrungs- und Erhärtungsbeschleuniger nach Anspruch 1 bis 12 in einem Spritzbeton oder Spritzmörtel.
